# EUROPEAN PATENT SPECIFICATION

(11) **EP 0 926 885 B1**
(45) Date of publication and mention of the grant of the patent: **08.10.2003**
(21) Application number: 98310647.7
(22) Date of filing: 23.12.1998
(51) Int. Cl.: H04N 3/15

(54) **Solid state image pickup apparatus**
Halbleiter-Bildaufnahmevorrichtung
Dispositif semiconducteur de prise d'images

(30) Priority: 26.12.1997 JP 36109097
(43) Date of publication of application: 30.06.1999
(73) Proprietor: CANON KABUSHIKI KAISHA, Tokyo (JP)
(72) Inventor: Kochi, Tetsunobu, Ohta-ku, Tokyo (JP); Ueno, Isamu, Ohta-ku, Tokyo (JP); Koizumi, Toru, Ohta-ku, Tokyo (JP); Hiyama, Hiroki, Ohta-ku, Tokyo (JP); Sugawa, Shigetoshi, Ohta-ku, Tokyo (JP); Ogawa, Katsuhisa, Ohta-ku, Tokyo (JP); Sakurai, Katsuhito, Ohta-ku, Tokyo (JP)
(74) Representative: Beresford, Keith Denis Lewis

(56) References cited:
- EP-A- 0 282 993
- EP-A- 0 596 748
- EP-A- 0 785 673
- JP-A- 9 247 689
- US-A- 4 691 253

## Description

### BACKGROUND OF THE INVENTION

### Field of the Invention

The present invention relates to a solid state image pickup apparatus with a photoelectric conversion unit, and more particularly to a solid state image pickup apparatus capable of reading an optional area of the photoelectric conversion unit in a pixel read mode such as a block read mode and a skip read mode, and to an image pickup system using such a solid state image pickup apparatus.

### Related Background Art

Image information is widely used nowadays, and a variety of image data display methods are used in order to match various image data formats of multimedia.

High resolution image pickup devices are known which use CCD's for providing a resolution in excess of a high definition television (two million pixels). Most of these image pickup devices substantially deal with only still images, and it takes several seconds to capture an image of one frame. For example, a digital still camera using such a high resolution image pickup device has the demerit that framing and focussing essential for the function of a camera cannot be executed in real time. In addition, since a frame rate is slow, a signal accumulation time is long, which poses a problem of a degraded image quality to be caused by dark charges accumulated together with signal charges. Although a method of cooling an image pickup device is incorporated in order to suppress the generation of dark charges, this method is associated with a problem of an increased total consumption power.

A report which can solve the above problems is disclosed, for example, in "Four Million Pixels CMD Image Sensor", The Institute of Image Information and Television Engineers, ITE Technical Report, Vol. 21, No. 21, pp. 37-42, IPU 97-15, ce'97-7 (Mar., 1997). In this report, three terminals other than the gate of a CMD element of a four-terminal CMOS device are supplied with d.c. biases, and an output signal of a CMD element which is a source current is controlled by changing the gate potential. Of a full read mode, a skip read mode, and a block read mode, the block read mode reads image information of all pixels in an optionally designated block area. The block read mode is realized by two processes, a process of setting a read start position and a process of reading an optionally designated block area. CMD elements disposed in a matrix are read by sequentially turning on and off a scan shift register.

However, although the report describes the block read of CMD elements of the CMOS device, it does not describe how noises of CMD elements are read. Since a CMOS sensor manufactured by CMOS processes has an SN ratio smaller than a CCD sensor, it is desired to improve an S/N ratio also in the block read mode.

Noises generated in a CMOS type solid state image pickup device include random noises and fixed pattern noises. Random noises can be reduced by providing an amplifier with each pixel of a CMOS type solid state image pickup device, and fixed pattern noises can be reduced by subtracting noise data from picked-up image data. Although these techniques are well known, particular methods suitable for practice are not known.

EP-A-0282993 describes a device having a photodetector array with a plurality of transistors on each line for providing an optical black reference signal. Means are provided for selecting a block of pixels for readout, the block being smaller than the full photodetector array.

US-A-4691253 describes a CCD imaging camera capable of recording either continuous moving video images in analogue format or high resolution still images in digital format. The apparatus includes means for clamping to a dark-current reference voltage.

JP-A-9247689 describes an imaging apparatus which may be operated in a manner which permits readout of a subset of pixels.

EP-A-0596748 describes a CCD imaging device capable of acquiring images of different aspect ratios by employing two horizontal CCD readout circuits which may be coupled together.

### SUMMARY OF THE INVENTION

The present invention provides a solid state image pickup apparatus including:
a plurality of first photoelectric conversion elements which are arranged in a first direction and shielded from light;
a plurality of second photoelectric conversion elements which are arranged in the first direction and not shielded from light;
scanning means to effect scanning so that signals of the plurality of first photoelectric conversion elements are read out sequentially; and
subtracting means to subtract from each signal read out from the second photoelectric conversion elements a signal voltage obtained as an average of the signals read out sequentially from the plurality of first photoelectric conversion elements,
characterised in that:
the scanning means is arranged to effect scanning so that signals of the plurality of second photoelectric conversion elements are read out every other photoelectric conversion element.

Other objects and features of the present invention will become apparent from the following detailed description of embodiments when read in conjunction with the accompanying drawings.

### BRIEF DESCRIPTION OF THE DRAWINGS

Fig. 1 is a circuit block diagram of a solid state image pickup apparatus.
Figs. 2A, 2B and 2C are conceptual diagrams illustrating each read mode of the solid state image pickup apparatus.
Fig. 3 is a timing chart illustrating a full read mode.
Fig. 4 is a timing chart illustrating a block read mode.
Fig. 5 is a timing chart illustrating a skip read mode according to the invention.
Fig. 6 is a timing chart illustrating the full read mode,
Figs. 7A and 7B are block diagrams of a signal processing circuit used in each read mode.
Figs. 8A and 8B are a circuit diagram of a selector circuit and a table illustrating its operation.
Figs. 9A, 9B and 9C are a circuit diagram of the selector circuit and timing charts illustrating its operation.
Fig. 10 is a block diagram showing an image pickup system.

Embodiments of the invention and comparative examples will be described in detail with reference to the accompanying drawings.

### (First Embodiment)

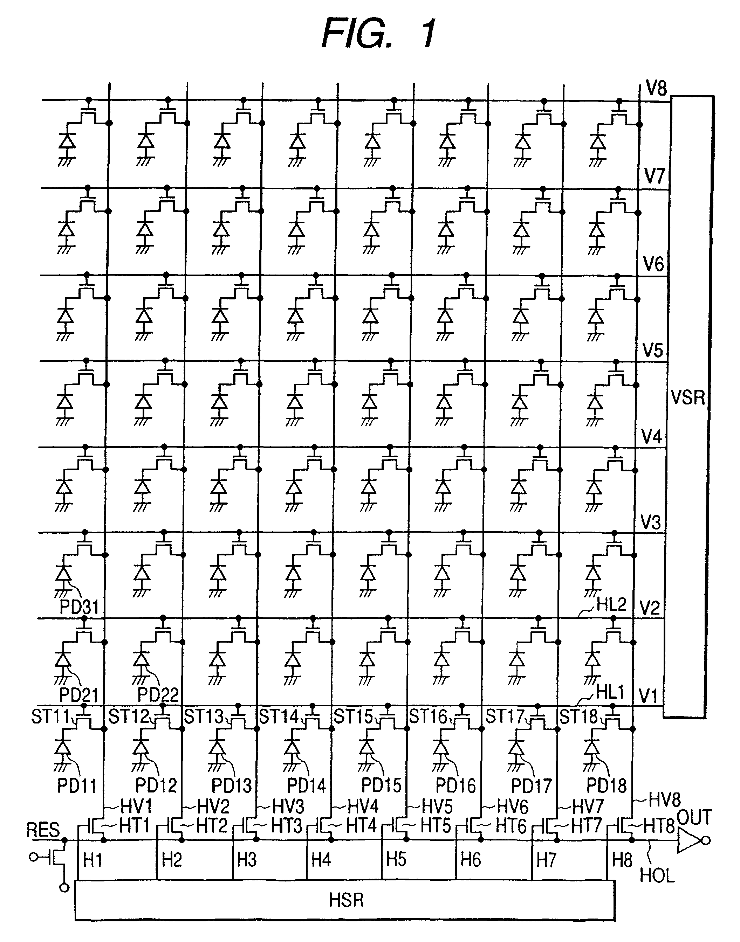

Fig. 1 is a circuit diagram of a driver for driving a CMOS sensor constituted of photoelectric conversion elements each having two elements. Each photoelectric conversion element is constituted of one of PN junction photodiodes PD11 to PD22, ... and a corresponding one of transfers transistors ST11 to ST22, ... connected to the anodes of the photodiodes. A vertical selector circuit VSR sequentially outputs high level outputs V1 to V8 to sequentially activate vertical select lines HL1, HL2, ..., and a horizontal selector circuit HSR sequentially outputs high level outputs H1 to H8 to sequentially turn on horizontal transfer MOS transistors HT1 to HT8. Therefore, image charges accumulated in respective pixels are time sequentially read from the respective vertical output lines HV1 to HV8 to an output line HOL and output via an amplifier AMP.

A reset MOS transistor RES turns on the output line HOL to reset the output line HOL each time the pixel charges are output. Of the photodiodes PD11 to PD22, ... the anodes of the photodiodes PD11, PD12, PD21, PD22, PD31, ... are shielded to pick up dark charges.

In this CMOS sensor, as photons are impinged upon a PN junction of each photoelectric conversion element constituting a pixel, pairs of electrons and holes are generated and accumulated in the deletion layer and the transfer MOS transistor ST11, ... reads the electrons or holes. The CMOS sensor including the horizontal and vertical selector circuits is manufactured by CMOS processes and therefore called a CMOS sensor.

In this embodiment, although a passive type MOS sensor is used, an amplification type AMI (amplification type MOS sensor), a CMD (charge modulation type CMOS sensor), or an APS (active pixel type sensor) may also be used.

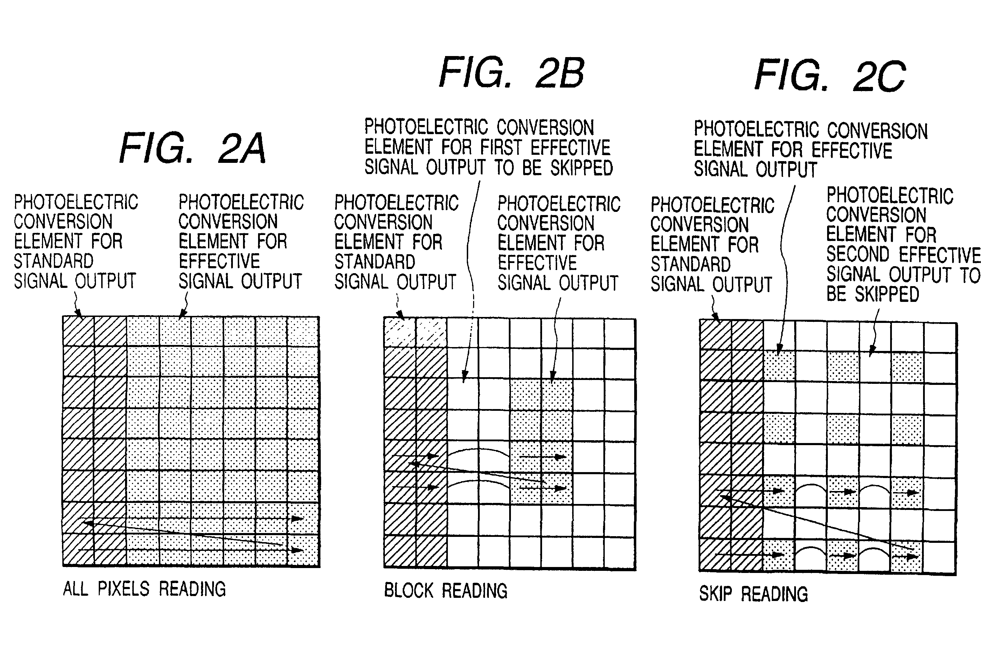

Fig. 2C illustrates an example of a skip read mode. In this mode, standard signals of dark charges are read from the light shielded photoelectric conversion element group in left two columns, whereas effective signals of photo charges are read from the effective signal outputting photoelectric conversion element group by skipping every second pixels.

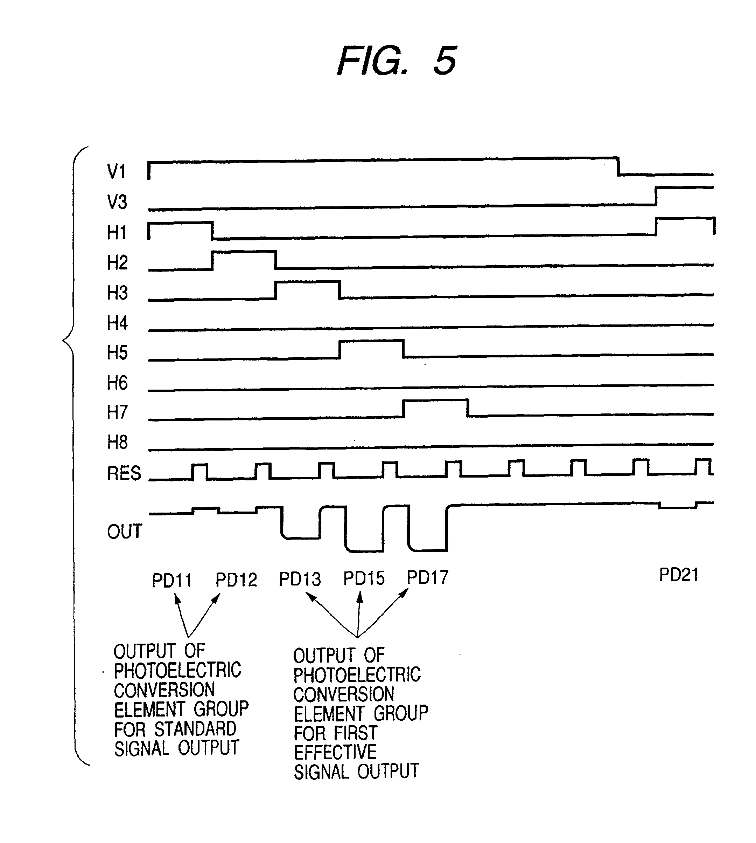

Fig. 5 is a timing chart illustrating a skip read mode of the solid state image pickup apparatus shown in Fig. 2C. In this skip read mode, every second pixels in the horizontal and vertical directions are read in the pixel area for reading effective signals.

The vertical selector circuit VSR outputs first a high level output V1 to activate the vertical select line HL1, and the horizontal selector circuit HSR sequentially outputs high level outputs H1, H2, H3, H5, H7, ... to sequentially turn on the horizontal transfer MOS transistors HT1, HT2, HT3, HT5, HT7, .... Therefore, image charges accumulated in respective pixels are time sequentially read from the respective vertical output lines HV1, HV2, HV3, HV5, HV7, ... to the output line HOL and output via the amplifier AMP.

While the horizontal selector circuit HSR sequentially outputs the high level outputs H1, H2, H3, H5, H7, ..., the reset MOS transistor RES is turned on to reset the output line HOL and corresponding photoelectric conversion element each time the pixel charges are read, to thereby eliminate the influence of adjacent pixels. As shown in Fig. 5, an output of the amplifier AMP takes a low potential level corresponding to pixel charges of the pixel photodiodes PD11 arid PD12 of the standard signal outputting photoelectric conversion element group and the pixel photodiodes PD13, PD15, and PD17 of the first effective signal outputting photoelectric conversion element group.

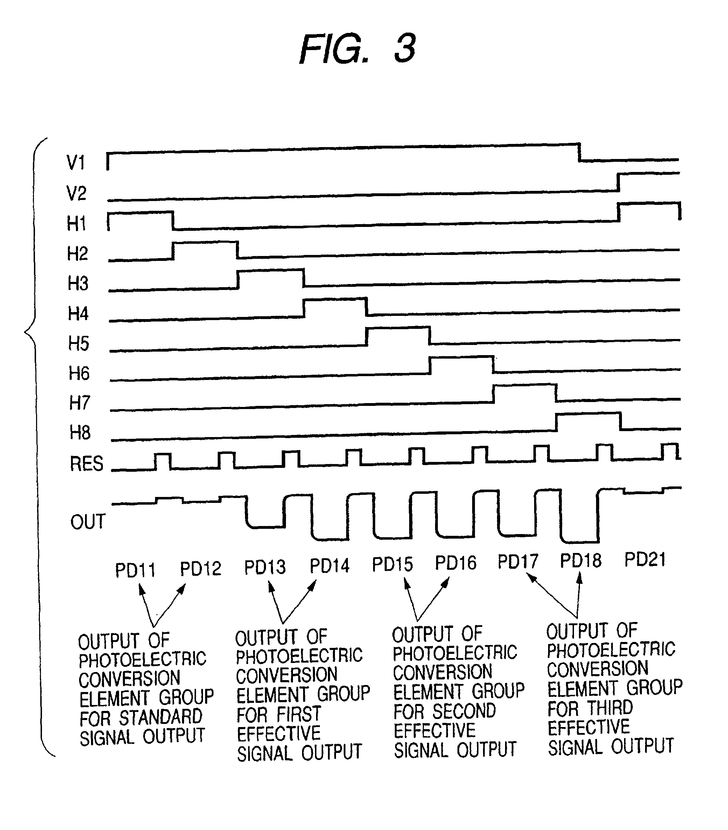

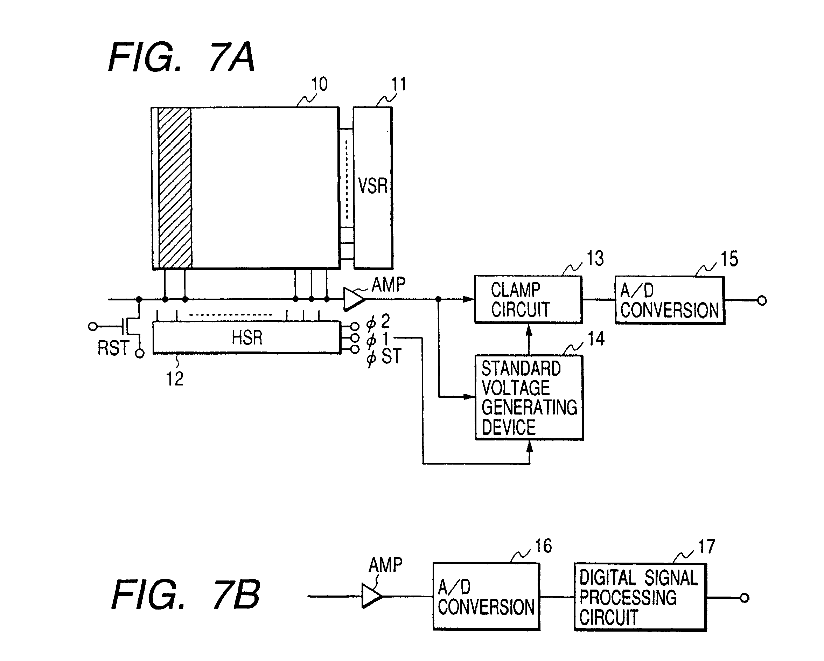

Next, an image signal processing circuit for processing an image signal as illustrated in Figs. 3 to 6 will be described with reference to Figs. 7A and 7B. Referring to Fig. 7A, a vertical selector circuit VSR11 activates each horizontal line of a photoelectric conversion unit 10 having photoelectric conversion elements disposed in a matrix, and a horizontal selector circuit HSR12 operates to sequentially output from an amplifier AMP image signals read from the standard signal outputting photoelectric conversion element group and from the effective signal outputting photoelectric conversion element group. An output of the photoelectric conversion apparatus is input to a standard voltage generating device 14 during an output period of the standard signal outputting photoelectric conversion element group, and the standard voltage generating device 14 generates a standard voltage. If the standard signal outputting photoelectric conversion element group contains two pixels, the standard voltage generating device 14 generates the standard voltage which is, for example, an average of two standard signals. During an output period of the effective signal outputting photoelectric conversion element group, an output of the solid state image pickup apparatus is input to a clamp circuit 13 and clamped on the standard voltage supplied from the standard voltage generating device 14. An image signal picked up from the effective signal outputting photoelectric conversion element group is subtracted by the standard voltage corresponding to dark charges on the horizontal line to thereby obtain a correct image signal corresponding to only image charges. The standard voltage generated by the standard voltage generating device 14 is reset after one horizontal line is read. The standard voltage generating device 14 again generates a standard voltage from standard signals read from standard signal outputting photoelectric conversion element group on the next horizontal line. The image signal read from the effective signal outputting photoelectric conversion element group on the next horizontal line is subtracted by the new standard voltage.

An output of the clamp circuit 13 is converted into a digital image signal by an A/D converter 15. The digital signal is processed by an unrepresented signal processing circuit for shading correction, gamma correction and the like. In this embodiment, the standard signal outputting photoelectric conversion element group contains two pixels in each line. The number of pixels is not limited only to two, but a desired number of pixels may be used so long as an optimum clamp is possible.

Fig. 7B is a block diagram of another signal processing circuit. An image signal from an amplifier AMP is supplied via a sample/hold circuit to an A/D converter circuit 16 whereat it is converted into a digital image signal. The digital image signal is supplied to a digital signal processing circuit 17. The digital signal processing circuit 17 calculates an average of standard signals representative of dark charges output during the output period of the standard signal outputting photoelectric conversion element group, and uses the average as the standard voltage. Each image signal of the same horizontal line output during the output period of the effective signal outputting photoelectric conversion element group is subtracted by the standard voltage to thereby eliminate noise components in the effective signal pixel. The effective image signal with eliminated noise components is thereafter processed for shading correction, gamma correction and the like. This signal processing circuit can be fabricated on the same chip as the photoelectric conversion unit manufactured through CMOS processes so that the solid state image pickup apparatus including the signal processing circuit can be manufactured.

### (Comparative examples not falling within the scope of the invention claimed)

Figs. 2A to 2C are conceptual diagrams illustrating read methods of the solid state image pickup apparatus using an area sensor as described above. Fig. 2A illustrates an example of a full read mode. In this mode, standard signals of dark charges are read from a light shielded standard signal outputting photoelectric conversion element group in left two columns as viewed in Fig. 2A, whereas effective signals of photo charges are read from an effective signal outputting photoelectric conversion element group in an effective read area. Fig. 2B illustrates an example of a block read mode. In this mode, standard signals of dark charges are read from the light shielded photoelectric conversion element group in left two columns, whereas effective signals of photo charges are read from the effective signal outputting photoelectric conversion element group only in a designated block area without reading other areas, in this example only from two pixels on one line.

The operation of the full read mode will be described with reference to the timing chart shown in Fig. 3. The vertical selector circuit VSR outputs first a high level output V1 to activate the vertical select line HL1, and the horizontal selector circuit HSR sequentially outputs high level outputs H1 to H8 to sequentially turn on the horizontal transfer MOS transistors HT1 to HT8. Therefore, image charges accumulated in respective pixels are time sequentially read from the respective vertical output lines HV1 to HV8 to the output line HOL and output via the amplifier AMP. While the horizontal selector circuit HSR sequentially outputs the high level outputs H1 to H8, the reset MOS transistor RES is turned on to reset the output line HOL and corresponding photoelectric conversion element each time the pixel charges are read, to thereby eliminate the influence of adjacent pixels. As shown in Fig. 3, an output of the amplifier AMP takes a low potential level corresponding to pixel charges of the pixel photodiodes PD11 to PD18. Thereafter, the vertical selector circuit VSR outputs a high level output V2 to repeat the above operations.

The light shielded pixel photodiodes PD11 and PD12 of the standard signal outputting photoelectric conversion element group output standard signals representative of dark charges. A pair of first effective signals is output from the pixel photodiodes PD13 and PD14, a pair of second effective signals is output from the pixel photodiodes PD15 and PD16, and a pair of third effective signals is output from the pixel photodiodes PD17 and PD18. Next, the light shielded pixel photodiodes PD21 and PD22 of the standard signal outputting photoelectric conversion element group output standard signals representative of dark charges, and operations similar to the above-described operations are repeated. In this manner, all pixels disposed in a matrix are read.

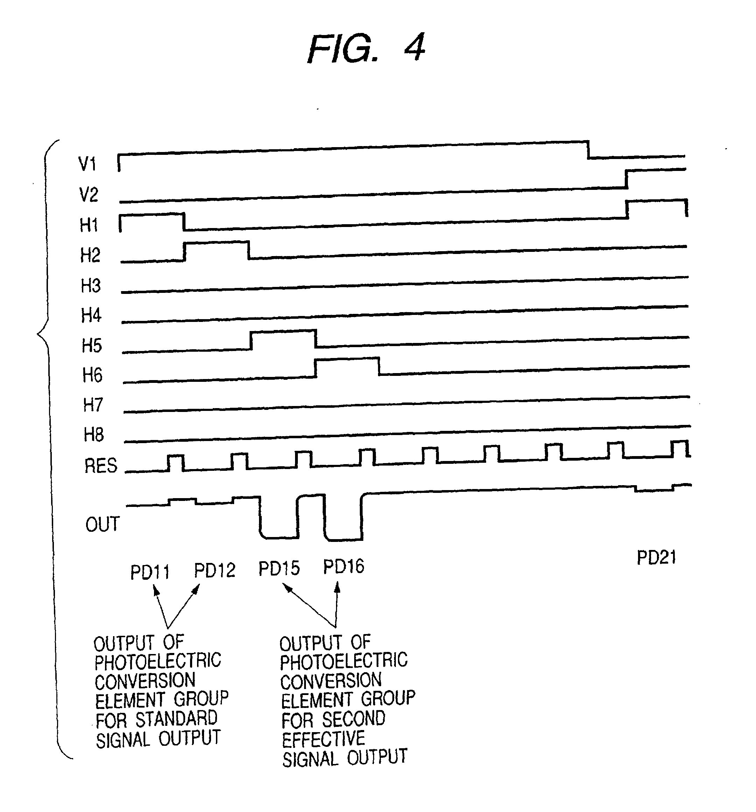

Fig. 4 is a timing chart illustrating a block read mode of the solid state image pickup apparatus shown in Fig. 2B. It is assumed that the designated block contains the pixel photodiodes PD15 and PD16.

The vertical selector circuit VSR outputs first a high level output V1 to activate the vertical select line HL1, and the horizontal selector circuit HSR sequentially outputs high level outputs H1, H2, H5, and H6 to sequentially turn on the horizontal transfer MOS transistors HT1, HT2, HT5, and HT6. Therefore, image charges accumulated in respective pixels are time sequentially read from the respective vertical output lines HV1, HV2, HV5, and HV6 to the output line HOL and output via the amplifier AMP.

While the horizontal selector circuit HSR sequentially outputs the high level outputs H1, H2, H5, and H6, the reset MOS transistor RES is turned on to reset the output line HOL and corresponding photoelectric conversion element each time the pixel charges are read, to thereby eliminate the influence of adjacent pixels. As shown in Fig. 4, an output of the amplifier AMP takes a low potential level corresponding to pixel charges of the pixel photodiodes PD11 and PD12 of the standard signal outputting photoelectric conversion element group and the pixel photodiodes PD15 and PD16 of the first effective signal outputting photoelectric conversion element group.

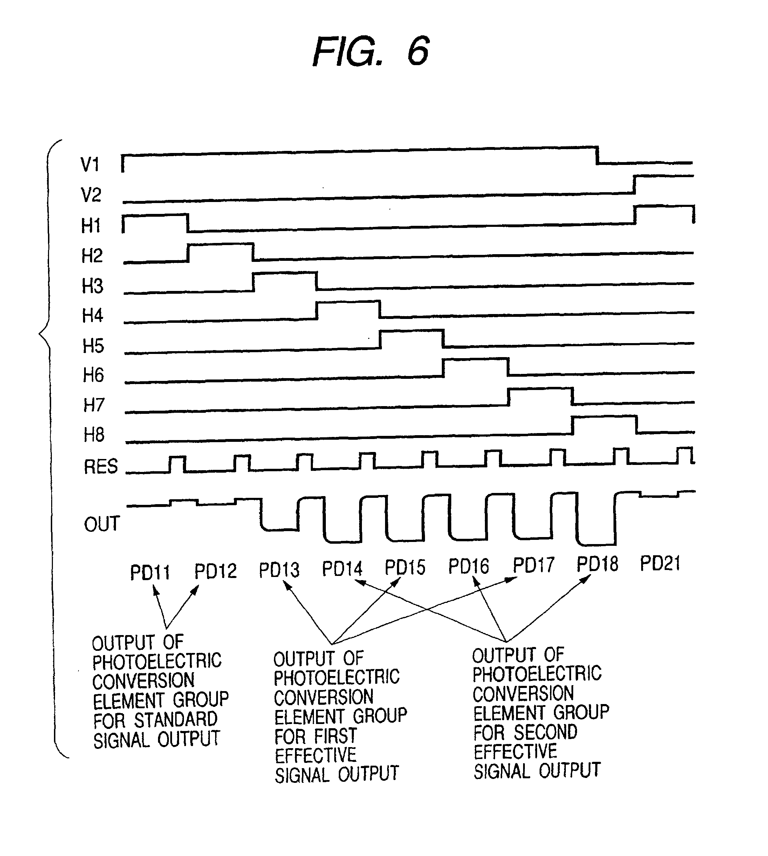

Fig. 6 is a timing chart illustrating another full read mode. As different from the full read mode shown in Fig. 3, odd number pixel photodiodes PD13, PD15, and PD17 of the first effective signal outputting photoelectric conversion element group are used for reading first effective signals, and even number pixel photodiodes PD14, PD16, and PD18 of the second effective signal outputting photoelectric conversion element group are used for reading second effective signals. In this case, both the horizontal and vertical selector circuits HSR and VSR operate in a similar manner.

### (Decoder)

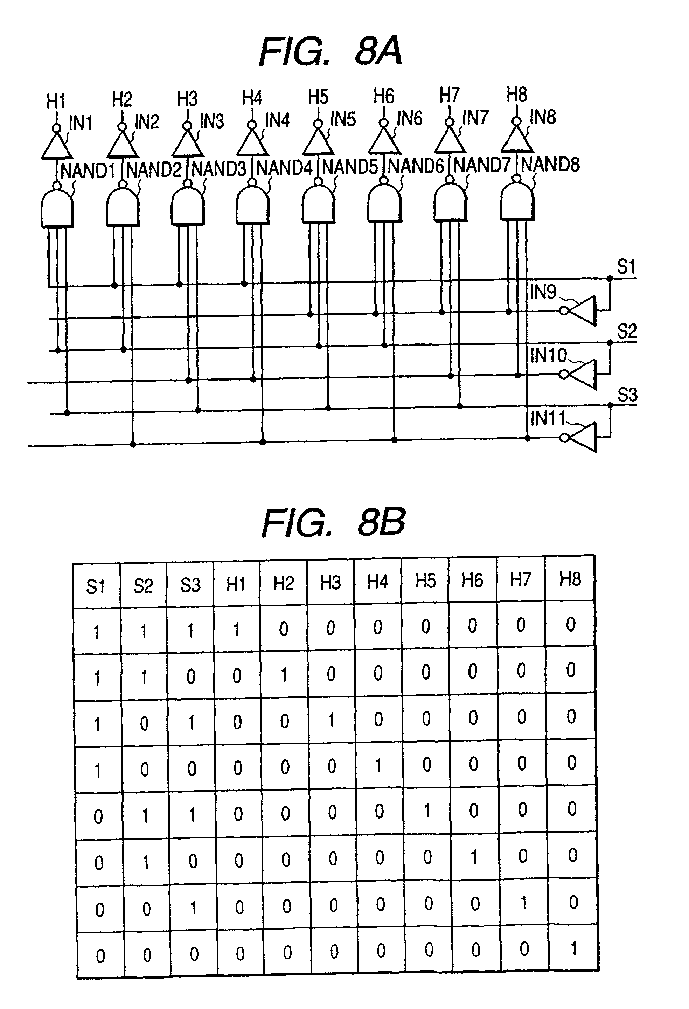

Figs. 8A and 8B are a circuit diagram of a decoder circuit constituting the horizontal selector circuit HSR shown in Fig. 1 and a table illustrating its operation. The horizontal circuit HSR is required in a pixel read mode, typically in the full read mode, to sequentially turn on the horizontal transfer MOS switches HT1 to HT8 and sequentially output the high level outputs H1 to H8 in order to pick up pixel charges from the vertical output lines H1 to H8. To this end, the operation of the logical table shown in Fig. 8B is performed. Specifically, pulse signals S1 to S3 and inverted pulse signals S1 to S3 obtained from inverters IN9 to INll are selectively supplied each of logical product gates NAND1 to NAND8. Inverters IN1 to IN8 connected to NAND1 to NAND8 sequentially output high level outputs H1 to H8. This operation is repeated to scan the whole matrix of the area sensor. This operation is also applied to the vertical selector circuit VSR to sequentially output high level outputs HL1 to HL8, although a lower repetition frequency is used in this case.

In the block read mode using this horizontal selector circuit HSR, pulse signals S1 to S3 sequentially outputting high level outputs H1, H2, H5, and H6 are supplied, as shown in Fig. 4. In the skip read mode, pulse signals S1 to S3 sequentially outputting high level outputs H1, H2, H3, H5, ... on the first horizontal line and H1, H2, H3, H5, ... on the next horizontal line are supplied, as shown in Fig. 5. These operations are also applied to the vertical selector circuit.

This horizontal selector circuit HSR can be formed on the same chip as the photoelectric conversion unit to have a smaller area and volume through CMOS processes. As compared to a CCD sensor, the number of manufacture processes can be reduced considerably.

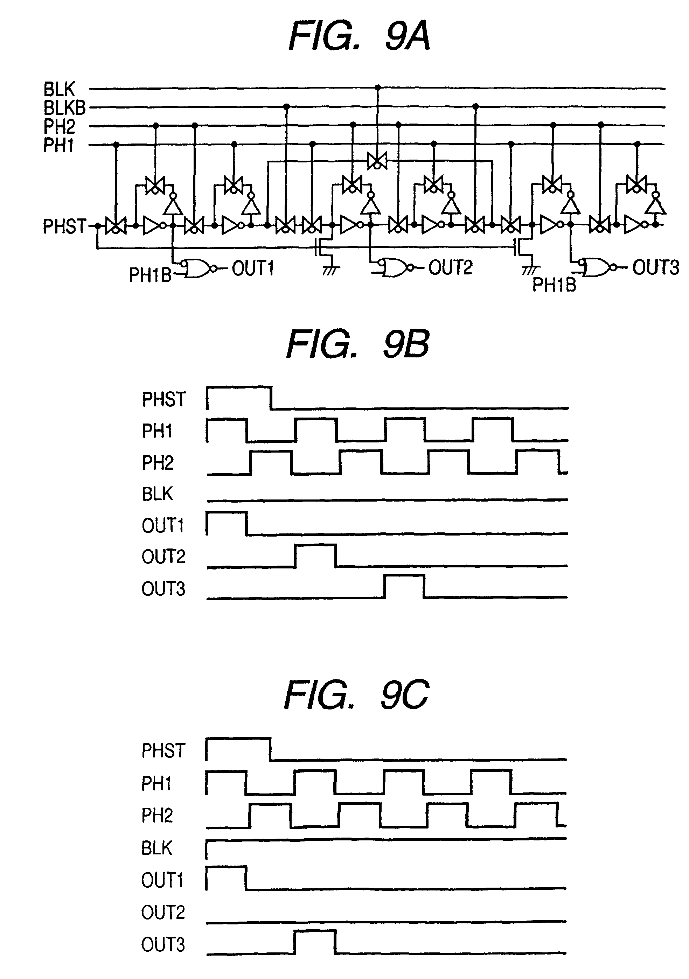

Next, the horizontal selector circuit HSR made of a shift register will be described with reference to Figs. 9A to 9C. Referring to Fig. 9A, clocks PH1B and BLKB of inverted clocks PH1 and BLK are input to the horizontal selector circuit HSR. The operation in the full read mode will be described with reference to the timing chart shown in Fig. 9B. In Fig. 9B, the clocks PH1B and BLKB are omitted.

When a high level start pulse PHST is input, it is latched by the first stage flip-flop circuit, and a shift pulse is output from OUT1 as the high level output H1 at a timing shown in Fig. 9B. The latched high level pulse is sequentially transferred to the flip-flop circuits at succeeding stages in response to clock pulses PH1 and PH2. In this manner, shift pulses are sequentially output from OUT2, OUT3, ... as the high level outputs H2, H3, ....

The operation of the block read mode and skip read mode will be described with reference to the timing chart shown in Fig. 9C. In the block or skip read mode, the clock BLK is set to the high level so that the high level start pulse PHST can be sequentially transferred to the flip-flop circuits at succeeding stages by skipping the flip-flop circuit with OUT2. In this manner, output pulses shown in Figs. 4 and 5 can be obtained.

As described above, an image signal picked up during the output period of the effective signal outputting photoelectric conversion element group is subtracted by a standard voltage representative of dark charges. Therefore, an image signal in a desired pixel area having a good S/N ratio and a good image quality can be obtained. A reliable operation of auto focussing and auto exposure for an image in a dark scene can be ensured.

As described above, a standard image signal representative of dark charges is read from the standard signal outputting photosensitive conversion element group before an effective image signal is read from the effective signal outputting photosensitive conversion element group. The standard image signal may be read from the standard signal outputting photoelectric conversion element group after the effective image signal is read from the effective signal outputting photoelectric conversion element group, with a similar operation as above and a high S/N ratio as above. In this case, the light shielded area shown in Figs. 2A to 2C from which dark charges are read is disposed on the right side in each of Figs. 2A to 2C, and the clamp circuit is provided with a memory of one line capacity. After the standard voltage generating device generates the standard voltage, the clamp circuit clamps image signals. The operation of the horizontal selector circuit is the same as that described above.

The standard image signals may be read from the standard signal outputting photoelectric conversion element group before and after the effective image signals are read from the effective signal outputting photoelectric conversion element group, with similar advantages described above. Also in this case, an area from which dark charges are read is disposed near the central area of each line of an area sensor. The standard image signals representative of dark charges are picked up at timings when the standard signal generating device generates the standard voltage.

### (Other functions)

Various functions can be obtained by selectively reading the pixel area in the block and skip read modes of a multi-pixel sensor (particularly an area sensor).

### (1) Auto Focussing Sensor

An in-focus state is determined from an image having a best contrast among a plurality of images time sequentially picked up by changing the focal length of the lens. In determining the in-focus state, it is not necessary to use image signals from all pixels, but only those signals from an area near a subject to be focussed can be used. By selectively outputting image signals from such an area, high speed auto focussing is possible.

More specifically, the block read mode is used. In the block read mode, a subject to be focussed is positioned at the center of the area sensor and the block around this center is designated. Under these conditions, the image signals of the photoelectric conversion elements in the block and the image signals representative of dark charges in the standard signal outputting photoelectric conversion element group on the center lines are read. The noise signals are subtracted from the image signals of the photoelectric conversion elements in the block to obtain correct image signals. Correct image signals are picked up a plurality of times by changing the focal length. For example, if the image signal has a clear contour, it is judged as an in-focus state. At this point, the auto focussing operation is terminated, and the subject is photographed. Since a predetermined narrow area of the block is read, auto focussing can be performed at high speed and in short time.

### (2) Automatic Exposure (AE) Sensor

An image of a subject is picked up by changing an exposure time. In accordance with the picked-up image signals, the exposure time for actual photographing is determined. Similar to an auto focussing sensor, it is not necessary to use image signals of all pixels, but only those signals in an area near the subject whose exposure is adjusted can be used. By selectively outputting only the image signals in the area near the subject, AE can be performed at high speed.

An exposure time of a still image camera is determined in accordance with a light amount in a central area of an angle of view. Therefore, similar to auto focussing, this central area is used as a block in the block read mode. By subtracting noise components, a correct exposure time can be determined at high speed. Also in a video camera which photographs a moving image, a continuously changing light amount of a subject is detected at high speed in the block read mode. In accordance with an image output level in the block read mode, a stop-down degree of an aperture corresponding to an optimum exposure time is determined. In accordance with the stop-down degree, the light amount of the exposure point incident upon the area sensor is regulated to thereby set a light amount providing linear characteristics. In this manner, an image signal of high sensitivity can be obtained.

### (3) Trimming

An electronic zooming is possible by cutting and picking up only a partial area of an image. In a digital camera, a high precision image output with a large data amount or a poor quality image output with a small data amount can be selectively obtained through image thinning.

### (4) Switching between Still Images and Moving Images

A still image is picked up with a sensor having one million and four hundred pixels, whereas a moving image of NTSC is output by reading image signals of a quarter of 1400 thousand pixels, or 350 thousand pixels. An image of 1400 thousand pixels has too fast a data rate and does not match a resolution of NTSC specifications, e.g., 525 × 460 pixels. In reading a still image, therefore, the full read mode is used and a standard voltage representative of dark charges on each line from the standard signal outputting photoelectric conversion element group is subtracted from the effective image signal to thereby obtain a high S/N image signal. In reading a moving image of NTSC, about a quarter of pixels is read so that a moving image signal can be read at high speed in the skip or block read mode. By selectively using the full read mode and the skip or block mode, a good S/N image signal can be obtained.

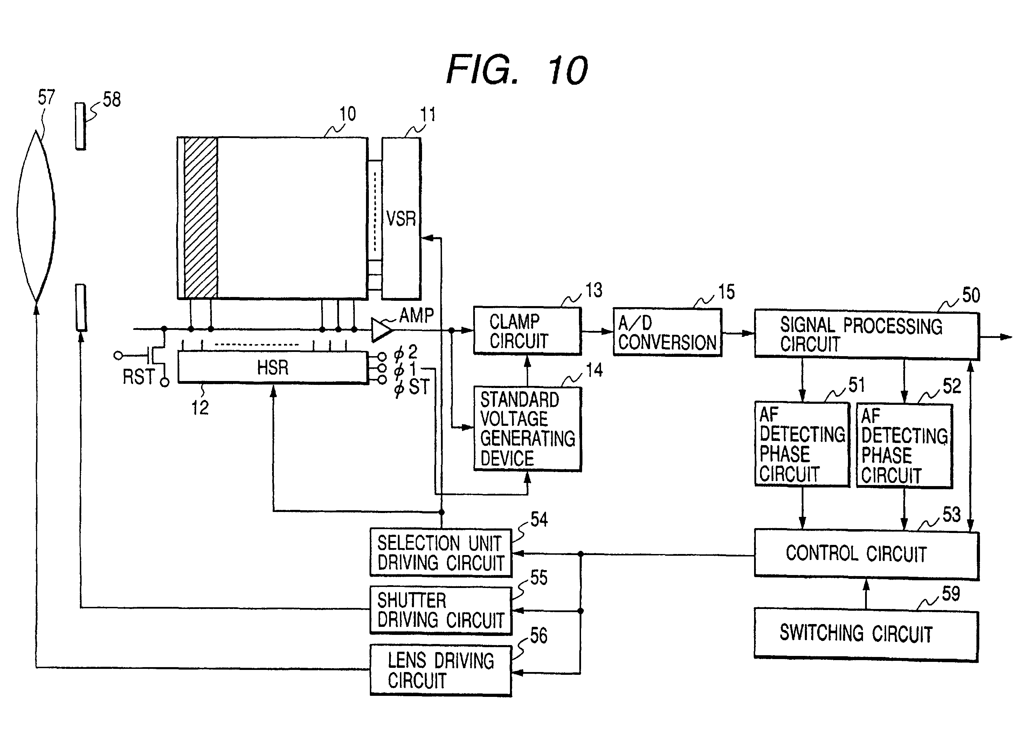

Next, an image pickup system having the functions (1) to (4) described above will be described with reference to Fig. 10.

Referring to Fig. 10, reference numerals 11 to 15 represent the same components as those shown in Fig. 7A. A reference numeral 50 represents a signal processing circuit for processing an A/D converted signal, such as for color processing. Reference numeral 51 represents an AF detector circuit (AF detecting phase circuit) for detecting a signal for AF from the signal processing circuit. Reference numeral 52 represents an AE detector circuit (AE detecting phase circuit) for detecting a signal for AE. Reference numeral 53 represents a control circuit for controlling the whole of the image pickup system. Reference numeral 54 represents a selector circuit driving circuit (selection unit driving circuit) for driving the horizontal selector circuit 12 and vertical selector circuit 11. Reference numeral 55 represents a shutter driving circuit for driving a shutter 58. Reference numeral 56 represents a lens driving circuit for driving a lens 57. Reference numeral 59 represents a switching circuit for switching between a still image mode and a moving image mode.

First, the operations of AF and AE will be described.

For the AF and AE operations, the control circuit 53 controls via the selector circuit driving circuit 54 the horizontal and vertical selector circuits 12 and 11 in order to output signals from photoelectric conversion elements in a necessary area of the photoelectric conversion unit 10. Output signals selected by the horizontal and vertical selector circuits 12 and 11 are supplied to the clamp circuit whereat noises are eliminated, and are supplied via the A/D converter 15 to the signal processing circuit 50. Signals for AF and AE processed by the signal processing circuit are input to the AF and AE detector circuits 51 and 52. In accordance with these signals for AF and AE, the control circuit 53 controls via the shutter and lens driving circuits 55 and 56 the shutter and lens to thereby perform AF and AE operations.

Next, an operation of switching between still images and moving images will be described.

When a still image mode is set by the switching circuit 57, the control circuit 53 controls via the selector circuit driving circuit 54 the horizontal and vertical selector circuits 12 and 11 in order to output signals from all the photoelectric conversion elements in the photoelectric conversion unit. Noises in the output signals from the photoelectric conversion elements are removed by the clamp circuit 13, and the output signals with the noises removed are input via the A/D converter circuit to the signal processing circuit 50. The signal processing circuit 50 performs color processing and the like to output a still image signal.

When a moving image mode is set by the switching circuit 59, the control circuit 52 performs the skip read operation by controlling the horizontal and vertical selector circuits 12 and 11, or the block read operation may be performed by focussing light upon an area near the central area of the photoelectric conversion unit by controlling the lens.

Noises in each signal output from the photoelectric conversion element are eliminated by the clamp circuit 13. The image signal with noises removed is input via the A/D converter circuit 15 to the signal processing circuit 50. The signal processing circuit 50 performs color processing and the like to sequentially output moving image signals.

Noises may be removed by the signal processing circuit as described with Fig. 7B, not by the clamp circuit 13 described above.

## Claims

1. A solid state image pickup apparatus including:
a plurality of first photoelectric conversion elements (PD11, PD12) which are arranged in a first direction and shielded from light;
a plurality of second photoelectric conversion elements (PD13-PD18) which are arranged in the first direction and not shielded from light;
scanning means (12) to effect scanning so that signals of said plurality of first photoelectric conversion elements (PD11/PD12) are read out sequentially; and
subtracting means (13,14) to subtract from each said signal read out from the second photoelectric conversion elements (PD13,PD15,PD17) a signal voltage obtained as an average of said signals read out sequentially from said plurality of first photoelectric conversion elements (PD11,PD12),
**characterised in that**:
said scanning means is arranged to effect scanning so that signals of said plurality of second photoelectric conversion elements (PD13-PD18) are read out every other photoelectric conversion element (PD13,PD15,PD17).

2. A solid state image pickup apparatus according to claim 1, wherein said scanning means (12) includes a shift register arranged to sequentially output pulses, and said shift register has a function of switching a clock path so that a predetermined pulse is not output.

3. A solid state image pickup apparatus according to claim 1, wherein said scanning means includes a decoder.

4. A solid state image pickup apparatus according to claim 1 or 2, wherein said scanning means is arranged to effect scanning so that the signals from said plurality of first photoelectric conversion elements (PD11,PD12) are output before the signals from said plurality of second photoelectric conversion elements (PD13,PD15,PD17) are output.

5. A solid state image pickup apparatus according to claim 1 or 2, wherein said scanning means is arranged to effect scanning so that the signals from said plurality of first photoelectric conversion elements are output after the signals from said plurality of second photoelectric conversion elements are output.

6. A solid state image pickup apparatus according to claim 1 or 2, wherein said scanning means is arranged to effect scanning so that the signals from said plurality of first photoelectric conversion elements are output before and after the signals from said plurality of second photoelectric conversion elements are output.

7. A solid state image pickup apparatus according to claim 1 or 2, wherein said plurality of second photoelectric conversion elements (PD13-PD18) are disposed in a matrix.

8. A solid state image pickup apparatus according to any preceding claim wherein said scanning means (12) is switchable between a first operational mode to effect the scanning as aforesaid and a second operational mode to effect scanning so that signals of said plurality of said first photoelectric conversion elements (PD11,PD12) are read out sequentially and signals of said plurality of second photoelectric conversion elements (PD13-PD18) are read out every photoelectric conversion element (PD13-PD18) sequentially; said solid state image pickup apparatus also comprising:
switching means (59) for selecting one of either a moving image mode or a still image mode; and
control means (53,54), responsive to said switching means, arranged to control the switching of said scanning means (12) between said first operational mode and said second operational mode in dependence upon the selection of either the moving image mode or still image mode by said switching means (59).

## Patentansprüche

1. Halbleiter-Bildaufnahmevorrichtung umfassend:
eine Vielzahl von ersten photoelektrischen Umwandlungselementen (PD11, PD12), welche in einer ersten Richtung angeordnet und lichtgeschützt sind;
eine Vielzahl von zweiten photoelektrischen Umwandlungselementen (PD13-PD18), welche in der ersten Richtung angeordnet sind und nicht lichtgeschützt sind;
eine Abtastungseinrichtung (12), um eine Abtastung durchzuführen, so daß Signale von der Vielzahl der ersten photoelektrischen Umwandlungselemente (PD11, PD12) sequentiell ausgelesen werden; und
eine Subtraktionseinrichtung (13, 14), um von jedem Signal, das von den zweiten photoelektrischen Umwandlungselementen (PD13, PD15, PD17) ausgelesen wird, eine Signalspannung, die als ein Durchschnittswert aus den Signalen gebildet wird, welche sequentiell von der Vielzahl der ersten photoelektrischen Umwandlungselemente (PD11, PD12) ausgelesen werden, zu subtrahieren,
**dadurch gekennzeichnet, daß**:
die Abtastungseinrichtung angeordnet ist, um eine Abtastung durchzuführen, so daß Signale von der Vielzahl der zweiten photoelektrischen Umwandlungselemente (PD13-PD18) aus jedem zweiten photoelektrischen Umwandlungselement (PD13, PD15, PD17) gelesen werden.

2. Halbleiter-Bildaufnahmevorrichtung nach Anspruch 1, wobei die Abtastungseinrichtung (12) ein zur sequentiellen Ausgabe von Impulsen angeordnetes Schieberegister umfaßt und das Schieberegister eine Funktion zum Schalten eines Takt-Pfades aufweist, so daß ein vorbestimmter Impuls nicht ausgegeben wird.

3. Halbleiter-Bildaufnahmevorrichtung nach Anspruch 1, wobei die Abtastungseinrichtung einen Dekodierer umfaßt.

4. Halbleiter-Bildaufnahmevorrichtung nach Anspruch 1 oder 2, wobei die Abtastungseinrichtung angeordnet ist, um eine Abtastung durchzuführen, so daß die Signale von der Vielzahl der ersten photoelektrischen Umwandlungselemente (PD11, PD12) ausgegeben werden, bevor die Signale von der Vielzahl der zweiten photoelektrischen Umwandlungselemente (PD13, PD15, PD17) ausgegeben werden.

5. Halbleiter-Bildaufnahmevorrichtung nach Anspruch 1 oder 2, wobei die Abtastungseinrichtung angeordnet ist, um eine Abtastung durchzuführen, so daß die Signale von der Vielzahl der ersten photoelektrischen Umwandlungselemente ausgegeben werden, nachdem die Signale von der Vielzahl der zweiten photoelektrischen Umwandlungselemente ausgegeben werden.

6. Halbleiter-Bildaufnahmevorrichtung nach Anspruch 1 oder 2, wobei die Abtastungseinrichtung angeordnet ist, um eine Abtastung durchzuführen, so daß die Signale von der Vielzahl der ersten photoelektrischen Umwandlungselemente ausgegeben werden, bevor und nachdem die Signale von der Vielzahl der zweiten photoelektrischen Umwandlungselemente ausgegeben werden.

7. Halbleiter-Bildaufnahmevorrichtung nach Anspruch 1 oder 2, wobei die Vielzahl der zweiten photoelektrischen Umwandlungselemente (PD13-PD18) zu einer Matrix angeordnet ist.

8. Halbleiter-Bildaufnahmevorrichtung nach einem der vorhergehenden Ansprüche, wobei die Abtastungseinrichtung (12) schaltbar ist zwischen einer ersten Betriebsart, um die vorgenannte Abtastung durchzuführen, und einer zweiten Betriebsart, um eine Abtastung durchzuführen, so daß Signale von der Vielzahl der ersten photoelektrischen Umwandlungselemente (PD11, PD12) sequentiell ausgelesen werden und Signale von der Vielzahl der zweiten photoelektrischen Umwandlungselemente (PD13-PD18) aus jedem photoelektrischen Umwandlungselement (PD13-PD18) sequentiell gelesen werden; die Halbleiter-Bildaufnahmevorrichtung umfaßt ferner:
eine Schalteinrichtung (59), um entweder eine Laufbildbetriebsart oder eine Stehbildbetriebsart auszuwählen; und
eine auf die Schalteinrichtung ansprechende Steuerungseinrichtung (53, 54), die angeordnet ist, um das Schalten der Abtastungseinrichtung (12) zu steuern zwischen der ersten Betriebsart und der zweiten Betriebsart in Abhängigkeit von der Auswahl einer Betriebsart aus entweder der Laufbildbetriebsart oder der Stehbildbetriebsart mittels der Schalteinrichtung (59).

## Revendications

1. Appareil à semiconducteurs de saisie d'image, comportant :
une pluralité de premiers éléments (PD11, PD12) de conversion photoélectrique, qui sont agencés dans une première direction et protégés contre la lumière ;
une pluralité de deuxièmes éléments (PD13 - PD18) de conversion photoélectrique, qui sont agencés dans la première direction et non protégés contre la lumière ;
un moyen (12) de balayage pour effectuer un balayage de telle sorte que des signaux de ladite pluralité de premiers éléments (PD11, PD12) de conversion photoélectrique sont lus séquentiellement ; et
un moyen (13, 14) de soustraction pour soustraire de chacun desdits signaux lus à partir des deuxièmes éléments (PD13, PD15, PD17) de conversion photoélectrique, une tension de signal obtenue en tant que moyenne desdits signaux lus séquentiellement à partir de ladite pluralité desdits premiers éléments (PD11, PD12) de conversion photoélectrique,
**caractérisé en ce que** :
ledit moyen de balayage est agencé pour effectuer un balayage de telle sorte que des signaux de ladite pluralité de deuxièmes éléments (PD13 - PD18) de conversion photoélectrique sont lus à partir d'un élément (PD13, PD15, PD17) de conversion photoélectrique sur deux.

2. Appareil à semiconducteurs de saisie d'image selon la revendication 1, dans lequel ledit moyen (12) de balayage comporte un registre à décalage agencé pour délivrer séquentiellement des impulsions, et ledit registre à décalage a une fonction de commutation d'un trajet d'horloge, de telle sorte qu'une impulsion prédéterminée n'est pas délivrée.

3. Appareil à semiconducteurs de saisie d'image selon la revendication 1, dans lequel ledit moyen de balayage comporte un décodeur.

4. Appareil à semiconducteurs de saisie d'image selon la revendication 1 ou 2, dans lequel ledit moyen de balayage est agencé pour effectuer un balayage, de telle sorte que les signaux en provenance de ladite pluralité de premiers éléments (PD11, PD12) de conversion photoélectrique sont délivrés avant que les signaux en provenance de ladite pluralité de deuxièmes éléments (PD13, PD15, PD17) de conversion photoélectrique sont délivrés.

5. Appareil à semiconducteurs de saisie d'image selon la revendication 1 ou 2, dans lequel ledit moyen de balayage est agencé pour effectuer un balayage, de telle sorte que les signaux en provenance de ladite pluralité de premiers éléments de conversion photoélectrique sont délivrés après que les signaux en provenance de ladite pluralité de deuxièmes éléments de conversion photoélectrique, sont délivrés.

6. Appareil à semiconducteurs de saisie d'image selon la revendication 1 ou 2, dans lequel ledit moyen de balayage est agencé pour effectuer un balayage, de telle sorte que les signaux en provenance de ladite pluralité de premiers éléments de conversion photoélectrique sont délivrés avant et après que les signaux en provenance de ladite pluralité de deuxièmes éléments de conversion photoélectrique, sont délivrés.

7. Appareil à semiconducteurs de saisie d'image selon la revendication 1 ou 2, dans lequel ladite pluralité de deuxièmes éléments (PD13 - PD18) de conversion photoélectrique sont disposés dans une matrice.

8. Appareil à semiconducteurs de saisie d'image selon l'une quelconque des revendications précédentes, dans lequel ledit moyen (12) de balayage peut être commuté entre un premier mode opérationnel pour effectuer le balayage tel que mentionné ci-dessus et un deuxième mode opérationnel pour effectuer le balayage, de telle sorte que des signaux de ladite pluralité desdits premiers éléments (PD11, PD12) de conversion photoélectrique sont lus séquentiellement et des signaux de ladite pluralité de deuxièmes éléments (PD13 - PD18) de conversion photoélectrique sont lus à chaque élément (PD13 - PD18) de conversion photoélectrique séquentiellement ; ledit appareil à semiconducteurs de saisie d'image comprenant aussi :
un moyen (59) de commutation pour sélectionner l'un d'un mode à image mobile ou d'un mode à image fixe ; et
un moyen (53, 54) de commande, sensible audit moyen de commutation, agencé pour commander la commutation dudit moyen (12) de balayage entre ledit premier mode opérationnel et ledit deuxième mode opérationnel en fonction de la sélection, soit du mode à image mobile, soit du mode à image fixe, par ledit moyen (59) de commutation.
